# EUROPEAN PATENT APPLICATION

(11) **EP 2 343 666 A1**
(43) Date of publication of application: **13.07.2011**
(21) Application number: 10015521.7
(22) Date of filing: 10.12.2010
(51) Int. Cl.: G06F 21/00, H04L 29/06, G06F 1/14

(54) **Method and system for time-synchronizing of a user terminal with a server**

(30) Priority: 27.12.2009 PL 46005809
(71) Applicant: Polska Wytwornia Papierow Wartosciowych S.A., 00-222 Warszawa (PL)
(72) Inventor: Cwietkowski, Tomasz, 91-161 Lódz (PL)

(57) **Abstract**

A method for time-synchronizing of a user terminal having a terminal clock (111) with a server (120) having a server clock (121) not synchronized with the terminal clock (111), without using data transmission connections, wherein the method comprises the steps of determining a time difference between the server clock (121) and the terminal clock (111), storing the time difference in a memory (114) of the user terminal and providing a synchronized terminal time equal to a current value of the terminal clock (111) corrected by the time difference read from the memory (114).

## Description

The present invention relates to time-synchronizing of a user terminal with a server.

User terminals may have applications requiring appropriate time synchronization with a server.

For example, banking systems may be protected with time-synchronized one-time passwords. The user may have a personalized terminal, which generates the one-time password as a function of current time and a unique user's seed. Next, the server checks the compliance of the password provided by the user with a password generated locally at the server. Such authentication procedure requires synchronization between the clocks of the user terminal and the server.

Authentication systems utilizing time-synchronized one-time passwords utilize hardware tokens with a precise clock, synchronized with the server clock at a manufacturing stage and non-alterable by the user. Software tokens can be used as well, which are software applications to be stored and executed on a general-purpose electronic terminal. However, software tokens rely on the system clock of the terminal on which they operate, which is usually not synchronized with the server clock, i.e. it may differ from the server time, or can be intentionally adjusted by the user due to time zone change or daylight saving time switch. Therefore, appropriate operation of a software token requires pre-synchronization of terminal clock with the server clock. There are known software applications for synchronizing the terminal clock with the server clock. However, such applications are terminal-specific, i.e. the setting of terminal clock requires access to terminal-specific functions. Therefore, it is not feasible to create a universal application for synchronizing any terminal with the server clock.

The aim of the present invention is to provide a method for time-synchronizing of a user terminal with a server in a case when the terminal clock is not synchronized with the server clock, the method being universal and applicable to a wide range of user terminals and does not require use of data transmission connections.

The object of the invention is a method for time-synchronizing of a user terminal having a terminal clock with a server having a server clock not synchronized with the terminal clock, without using data transmission connections, wherein the method comprises the steps of determining a time difference between the server clock and the terminal clock, storing the time difference in a memory of the user terminal, providing a synchronized terminal time equal to a current value of the terminal clock corrected by the time difference read from the memory.

Determining the time difference at the user terminal may comprise the steps of invoking a synchronization event, receiving a value of the server clock and a value of the terminal clock associated with the moment of occurrence of the synchronization event and calculating the time difference between the value of the server clock and the value of the terminal clock associated with the moment of occurrence of the synchronization event.

Determining the time difference at the user terminal may comprise the steps of invoking a synchronization event, providing a value of the terminal clock associated with the moment of occurrence of the synchronization event for notification to the server and receiving the time difference provided by the server.

The synchronization event can be a visual and/or an acoustic event played by the user terminal.

The object of the invention is also a method for generating a time-synchronized one-time password in a user terminal having a terminal clock for authenticating the user with a server having a server clock not synchronized with the terminal clock, wherein method comprises the steps of time-synchronizing of the user terminal with the server according to the above-described method and generating the one-time password in the user terminal as a function of the synchronized terminal time.

The method may further comprise the step of providing the synchronization information at the user terminal by displaying the one-time password, (which should be identical with the password generated at the server and identifying the server) generated on a basis of the synchronized terminal time, and displaying a time-variable object indicating the time elapsed since the time of generation of the one-time password.

The time-variable object can be displayed on top of the time-synchronized one-time password such as to gradually reveal the time-synchronized one-time password.

Another object of the invention is a computer program comprising program code means for performing all the steps of the method according to the invention when said program is run on a computer, as well as a computer readable medium storing computer-executable instructions performing all the steps of the computer-implemented method according the invention when executed on a computer.

The object of the invention is also a user terminal having a terminal clock not synchronized with a server clock of a server, wherein the user terminal further comprises a synchronization module configured to determine a time difference between the server clock and the terminal clock, a memory for storing the time difference and a synchronized timer configured to provide a synchronized terminal time as a current state of the terminal clock corrected by the time difference read from the memory.

The synchronization module of the user terminal can be configured to invoke a synchronization event, receive a value of the server clock and a value of the terminal clock associated with the synchronization event and to determine a time difference between the value of the server clock and the value of the terminal clock associated with the synchronization event.

The synchronization module of the user terminal can be configured to invoke a synchronization event, provide a value of the terminal clock associated with the synchronization event for notification to the server and to receive the time difference provided by the server.

The terminal may further comprise a password generator for generating a time-synchronized one-time password for authenticating the user with a server, wherein the password generator is configured to generate the time-synchronized one-time password as a function of the synchronized terminal time read from the synchronized timer.

The synchronization module of the user terminal can be further configured to provide a synchronization information by displaying the time-synchronized one-time password and displaying a time-variable object indicating the time elapsed since the time of generation of the time-synchronized one-time password.

Another object of the invention is a computer system comprising a terminal and a server and requiring time synchronization between the terminal and the server, wherein the terminal is a user terminal according to the invention and the server comprises a synchronization module configured to receive a synchronization event notification and to provide the value of the server clock associated with the moment of occurrence of the synchronization event.

The synchronization module of the server can be further configured to provide a synchronization information by displaying a time-synchronized one-time password generated as a function of a current state of the server clock and displaying a time-variable object indicating the time elapsed since the time of generation of the time-synchronized one-time password.

The present invention is shown on a drawing, in which:
Fig. 1 shows the structure of the system according to the invention,
Fig. 2 shows the architecture of the user terminal,
Fig. 3 shows the steps of an authentication procedure for generating time-synchronized one-time passwords,
Figs. 4A-4D show an exemplary user interface for use during the synchronization,
Fig. 5 shows the steps of one synchronization method,
Fig. 6 shows the steps of another synchronization method.

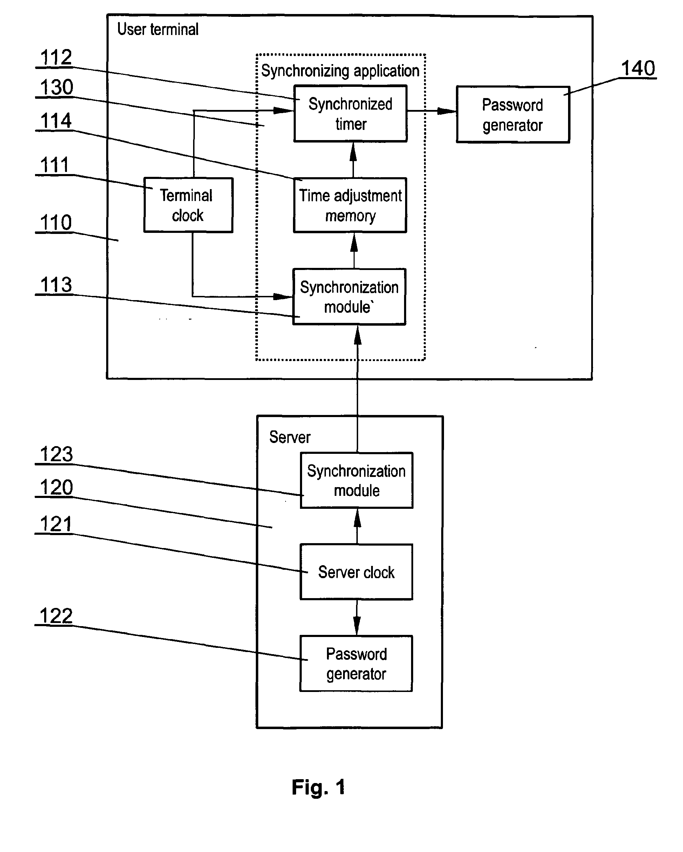

Fig. 1 shows the structure of the system according to the invention. A user terminal 110 can be a general-purpose device, such as a stationary device, for example a personal computer, a data terminal, a digital television set-top box, etc. or a portable device, such as a palmtop computer, a laptop computer, a mobile phone, etc. The user terminal 110 has a terminal clock 111, which can be set as desired by the user, for example set to an arbitrary time zone. The server 120 provides services to the user, such as banking services, which require time synchronization of the user terminal with the server, in order to allow secure authentication by time-synchronized one-time passwords. The server 120 has a server clock 121, which is not synchronized with the terminal clock, i.e. the system does not require any procedures for synchronizing the terminal clock 111 with the server clock 121 and vice versa, related to changing the terminal or server clock time.

Moreover, the system according to the invention does not require data transmission connections between the terminal 110 and the server 120 to perform synchronization. Even if the terminal 110 and the server 120 are connected with data transmission connections, then these connections are not used in the solution according to the invention.

The terminal 110 comprises a terminal clock 111 and a synchronizing application 130. The synchronizing application includes a synchronization module 113 configured to determine the time difference between the server clock 121 and the terminal clock 111. The time difference can be stored in a time adjustment memory 114, for example in a fragment of a non-volatile memory of the terminal, which limits the necessity for determining the time difference until the synchronized time becomes not up to date, for example as a result of inaccuracy of the terminal clock, change of the terminal clock by the user.

The application 130 (such as e.g. a software token application) includes a synchronized timer 112, which is configured to provide synchronized clock time equal to a current value of the terminal clock 111 corrected by the time difference. The synchronized timer 112 can be used by any application of the user terminal which requires a time reference synchronized with the server clock, such as a time-synchronized one-time password generator 140. Therefore, the password generator 140, instead of reading time directly from the terminal clock 111, may read the synchronized time from the synchronized timer 112.

The password generator 122 of the server 120 is configured to generate the time-synchronized one-time password as a function of current time measured by the server clock 121. Therefore, if the desynchronization between the clocks 111, 121 has not changed since the determination of the time difference, the time references for generating the time-synchronized one-time password in the password generators 140, 122 are the same. Due to this, the whole system operates in the same manner as if the terminal clock 111 was synchronized with the server clock 121.

The time-synchronized one-time password is generated for a cycle which starts at a specific time reference, such as beginning of every minute and is valid for a specific time, such as one minute.

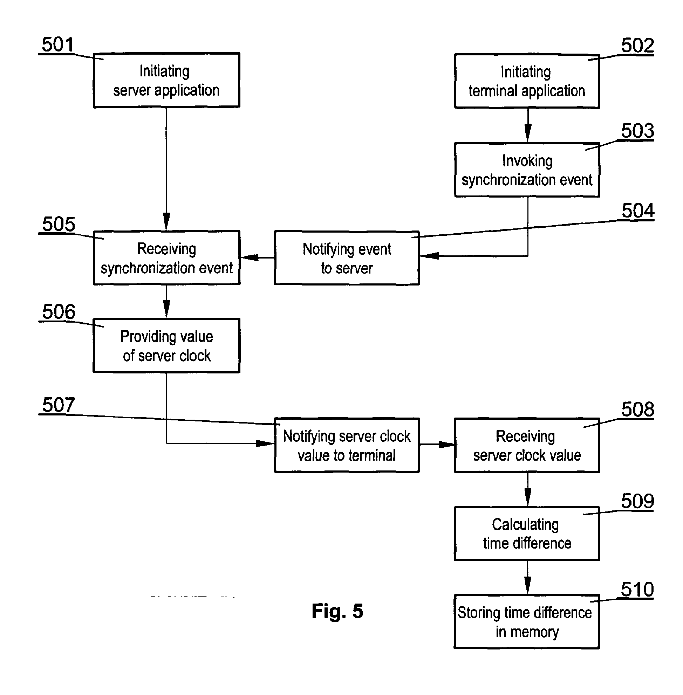

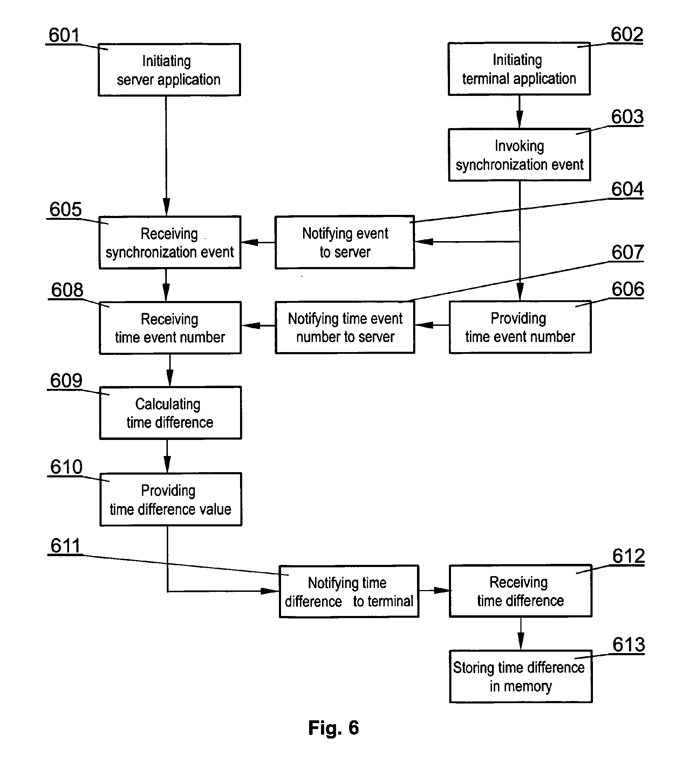

The server 120 comprises a synchronization module 123 which can read the server clock 121. The synchronization module 123 is configured to receive a synchronization event from the user and to provide the server clock value and/or the calculation of the time difference according to the procedures shown in Fig. 5 and 6.

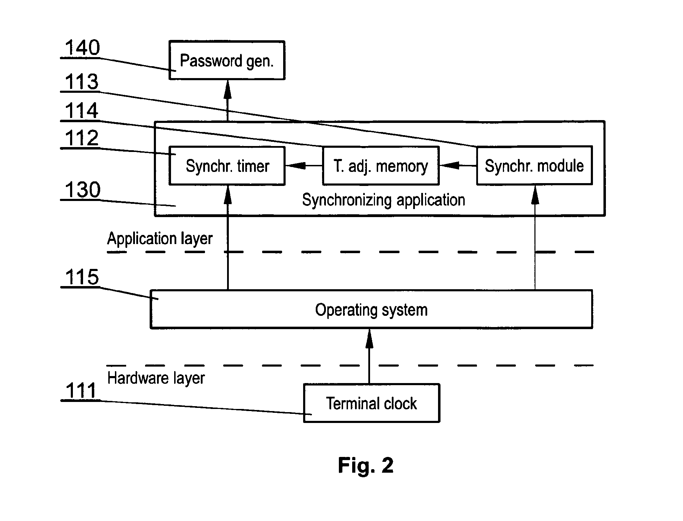

Fig. 2 shows the architecture of the user terminal 110. The terminal clock 111 is a hardware component of the hardware layer and is accessible for reading via an operating system 115. The synchronization timer 112 and the synchronization module 113 are software components of the application 130 in the application layer and can read the value of the terminal clock 111 by calling a function of the operating system 115. The time difference is stored in a time adjustment memory 114. The password generator 140 is an example of an application that requires synchronized time reference and communicates with the synchronized timer 112. It should be noted that in some user terminals, the operating system 115 allows only reading of the clock value, while the clock cannot be adjusted via standard operating system procedures. However, as the system according to the invention does not require setting of the terminal clock 111 but only reading of its value, it can be fully implemented in the application layer and therefore is hardware-independent. Therefore, the method according to the invention can be implemented as a computer-implemented method. A computer program can be installed on the user terminal, the program comprising program code means for performing all the steps of the method according to the invention when the program is run on the terminal. The computer program can be stored on a computer readable medium.

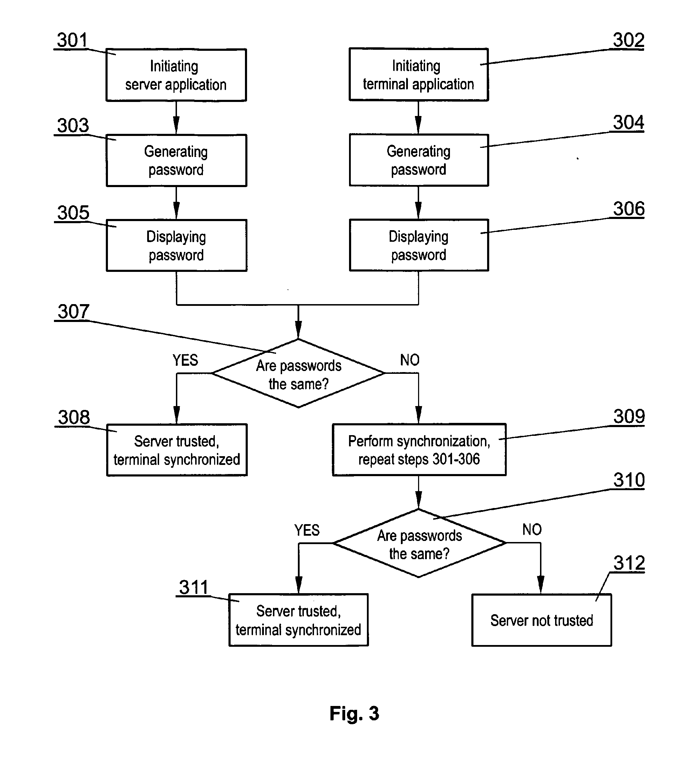

Fig. 3 shows the steps of an exemplary authentication procedure performed to check synchronization between the user terminal and the server in a system wherein time-synchronized one-time passwords are used. The left column shows the steps performed by the server, the right column shows the steps performed by the user terminal, and the central column presents possible decisions that can be taken by the user. The aim of the authentication procedure is to check whether the terminal is synchronized with the server and whether the server is a trusted party, by providing to the user a synchronization information at the server and at the terminal. The procedure is initiated by initiation of a server application in step 301, for example by the user entering the logging website of the server and entering the user ID. Simultaneously, the user initiates the application of the user terminal in step 302. In step 303, the server password generator generates a password as a function of the user ID and the server clock. In step 304, the terminal password generator generates a password as a function of the user ID and the synchronized terminal time read from the synchronized timer. In case the terminal application is run for the first time, the time difference stored in memory is set as default to zero and the value of the synchronized timer is equal to the value of the terminal clock. In steps 305, 306 the server and the terminal display their generated passwords on the screens and the user is able to compare in step 307 whether the displayed passwords are the same. In case the passwords are the same, the user can assume in step 308 that the server is a trusted party and the terminal is synchronized with the server. The passwords generated for synchronization in steps 305, 306 are passwords authenticating the server. Then, further server applications may be safely executed, such as an application allowing secure access to a banking account, wherein the following secure application may utilize a password authenticating the user, generated with a function having different parameters, but also taking into account in the terminal the terminal clock corrected by the time difference. In case the passwords are not the same, in step 309 the synchronization procedure is performed as described with reference to Fig. 5 or 6, and then the steps 301-306 are repeated. In step 310, when the terminal is assumed to be synchronized, it is checked whether after the synchronization the passwords are the same. If the passwords are the same, the user can assume in step 311 that the server is a trusted party and the terminal is synchronized with the server. If the passwords are not the same, the user should assume in step 312 that the server is not a trusted party.

Other simpler embodiments of the method may be implemented in case applications other than a password generator 140 are used. For example, if only time synchronization needs to be checked, in steps 303-307 only the values of the synchronized terminal time and the server time may be generated, displayed and compared by the user.

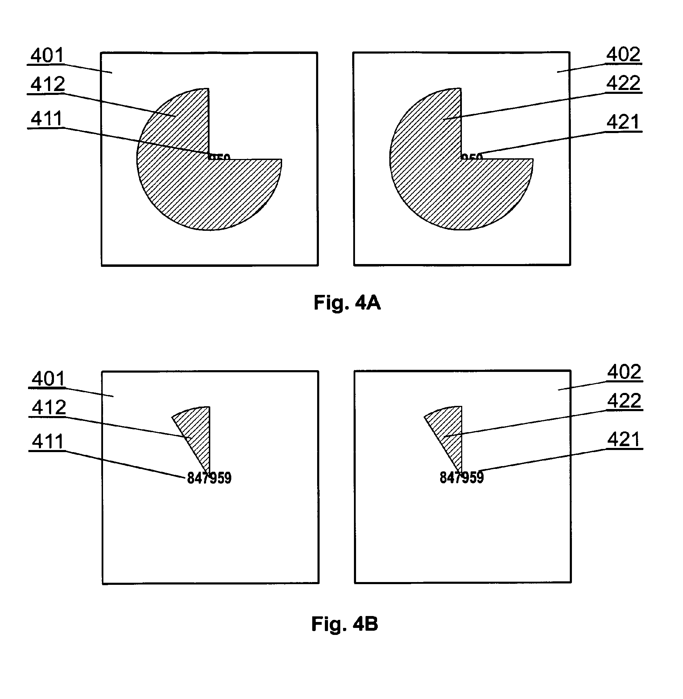

Figs. 4A and 4B show an exemplary user interface of the terminal application 401 and of the server application 402 for use during the authentication procedure in steps 305, 306 when the server and the terminal display their generated passwords. In addition, a time-variable object 412, 422 is placed to gradually reveal the displayed passwords 411, 421. The time-variable object 412, 422 may have a form of a progress bar, a progress circle, etc. It indicates the time, i.e. cycles, elapsed from the moment in which the password was generated. For example, the passwords 411, 421 can be generated every minute and in such a case the time-variable object 412, 422 will have a running length of 60 seconds. If the time-variable objects 412, 422 are in phase, this suggests that the terminal is synchronized with the server. By making the time-variable object 412, 422 to be progressively decreasing and overlaying it on the password 411, 421 the password is revealed gradually, as seen in Fig. 4B compared to Fig. 4A, which limits the possibility of a third party copying the webpage of the server - in such a case the copying would have to be performed continuously.

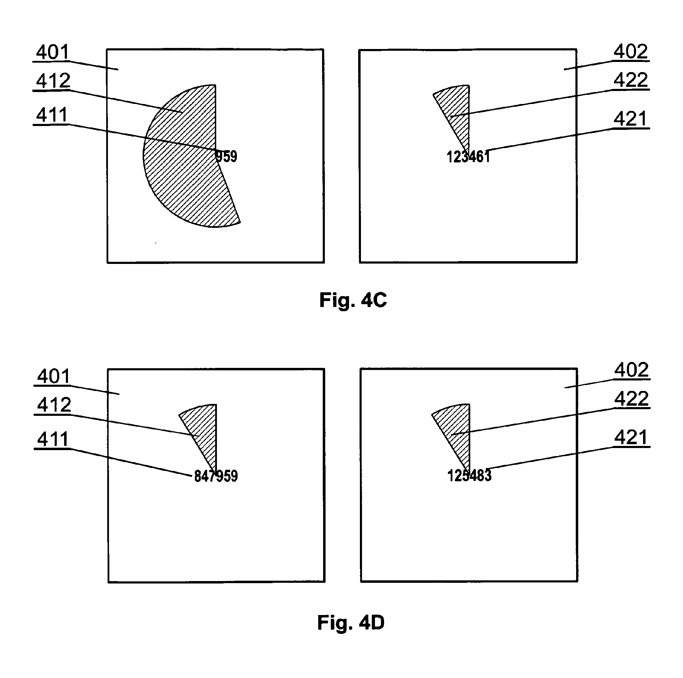

Fig. 4C shows an exemplary user interface of a terminal application 401 and of a server application 402 in a case, when the time-variable objects 412, 422 are out of phase and the passwords 411, 421 are different. This suggests lack of synchronization between the server clock and the terminal clock.

Fig. 4D shows an exemplary user interface of a terminal application 401 and of a server application 402 in a case, when the time-variable objects 412, 422 are in phase but the passwords 411, 422 are different - this suggests that the server is not trusted (e.g. it uses another function to generate the password) or the time difference between the terminal clock and the server clock is equal to an integer multiple of the length of the cycle.

Fig. 5 shows the steps of one synchronization method, wherein the left column shows the steps performed by the server, the right column shows the steps performed by the user terminal, and the central column presents actions to be taken by the user. The present method is directed to a situation in which there is no possibility of direct communication between the terminal and the server and some of the actions are to be performed manually by the user. First, the server synchronizing application is initiated in step 501 and the terminal synchronizing application is initiated in step 502. Next, in step 503 the terminal invokes a synchronization event, which is indicated for example visually by displaying a message "synchronize" on the screen of the terminal and/or acoustically by playing a sound. The synchronization event may be preceded by generating a time-progressive object, such as a progress bar, indicating the time remaining to the synchronization event, in order to prepare the user for the synchronization event. When the synchronization event is invoked, the user notifies the moment of synchronization event to the server in step 504, for example by clicking a dedicated button, e.g. a "synchronize" button of the server application. In a typical situation, the user will notify the server at the same moment or approximately to the moment of invoking the synchronization event at the user terminal. The synchronization event may be invoked at the beginning of the password generation cycle, such as beginning of every minute. In case the user terminal application is initialized very shortly before the beginning of the password generation cycle, for example less than 5 seconds, the procedure may wait till the next password generation cycle in order to give the user sufficient time. The server receives the synchronization event notification in step 505. Next, in step 506, the server provides to the user, for example at a text field of the server application, the value of the server clock at the time the synchronization event was received. The value of the server clock may be provided with a predetermined accuracy, such as 1 second. Next, in step 507 the user notifies the server clock value to the terminal, for example by entering the value to an input object of the terminal user interface. Next, in step 508 the synchronization module of the user terminal receives the server clock value, in step 509 calculates the time difference between the value of the server clock and the value of the terminal clock at the moment at which the synchronization event was invoked and stores the resulting value in step 510 as the time adjustment in the time adjustment memory.

Fig. 6 shows the steps of another synchronization method, wherein the left column shows the steps performed by the server, the right column shows the steps performed by the user terminal, and the central column presents actions to be taken by the user. Steps 601-605 are equivalent to steps 501-505 of the method shown in Fig. 5. The synchronization event is invoked in step 603 at a beginning of password generation cycle, for example at a beginning of every minute when passwords limited to 60 seconds are used. In step 606, the user terminal provides a time event number associated with the terminal clock value at the moment at which the synchronization event was invoked. The time event number can be calculated as the system clock time provided with a 1-second accuracy divided by the duration of the password, e.g. 60 seconds - in such a case the time event number specifies the number of password generation cycles elapsed since the zero time of the terminal clock. The time event number is in step 607 notified by the user to the server, for example by entering the value into an input field of the server application user interface. The server receives the time event number in step 608. In step 609 the server calculates the time difference between the server clock and the terminal clock at the time at which the time event was invoked. The calculated time difference value is provided to the user as a synchronization code in step 610, for example as a number of seconds between the clocks values protected with a checksum to eliminate errors during entering the code to the terminal. The user notifies the time difference in step 611 to the terminal, for example via entering the synchronization code to a text input object of the terminal user interface. The terminal receives the time difference in step 612 and stores it in the time adjustment memory in step 613.

## Claims

1. A method for time-synchronizing of a user terminal (110) having a terminal clock (111) with a server (120) having a server clock (121) not synchronized with the terminal clock (111), without using data transmission connections, **characterized in that** the method comprises the steps of:
- determining a time difference between the server clock (121) and the terminal clock (111),
- storing the time difference in a memory (114) of the user terminal,
- providing a synchronized terminal time equal to a current value of the terminal clock (111) corrected by the time difference read from the memory (114).

2. The method according to claim 1, wherein determining the time difference at the user terminal (110) comprises the steps of:
- invoking a synchronization event,
- receiving a value of the server clock (121) and a value of the terminal clock (111) associated with the moment of occurrence of the synchronization event,
- calculating the time difference between the value of the server clock (121) and the value of the terminal clock (111) associated with the moment of occurrence of the synchronization event.

3. The method according to claim 1, wherein determining the time difference at the user terminal (110) comprises the steps of:
- invoking a synchronization event,
- providing a value of the terminal clock (111) associated with the moment of occurrence of the synchronization event for notification to the server (120),
- receiving the time difference provided by the server (120).

4. The method according to claim 2 or 3, wherein the synchronization event is a visual and/or an acoustic event played by the user terminal (110).

5. A method for generating a time-synchronized one-time password in a user terminal (110) having a terminal clock (111) for authenticating the user with a server (120) having a server clock (121) not synchronized with the terminal clock (111), **characterized in that** the method comprises the steps of:
- time-synchronizing of the user terminal (110) with the server (120) according to the method of claims 1-4,
- generating the one-time password in the user terminal (110) as a function of the synchronized terminal time.

6. The method according to claim 5, further comprising the step of providing a synchronization information at the user terminal (110) by:
- displaying the one-time password (411) generated on a basis of the synchronized terminal time,
- displaying a time-variable object (412) indicating the time elapsed since the time of generation of the one-time password (411).

7. The method according to claim 6, wherein the time-variable object (412) is displayed on top of the time-synchronized one-time password (411) such as to gradually reveal the time-synchronized one-time password (411).

8. A computer program comprising program code means for performing all the steps of the method according to any of claims 1-7 when said program is run on a computer.

9. A computer readable medium storing computer-executable instructions performing all the steps of the computer-implemented method according to any of claims 1-7 when executed on a computer.

10. A user terminal (110) having a terminal clock (111) not synchronized with a server clock (121) of a server (120), **characterized in that** the user terminal (110) further comprises:
- a synchronization module (113) configured to determine a time difference between the server clock (121) and the terminal clock (111),
- a memory (114) for storing the time difference,
- a synchronized timer (112) configured to provide a synchronized terminal time as a current state of the terminal clock (111) corrected by the time difference read from the memory (114).

11. The user terminal according to claim 10, wherein the synchronization module (113) of the user terminal (110) is configured to invoke a synchronization event, receive a value of the server clock (121) and a value of the terminal clock (111) associated with the synchronization event and to determine a time difference between the value of the server clock (121) and the value of the terminal clock (111) associated with the synchronization event.

12. The user terminal according to claim 10, wherein the synchronization module (113) of the user terminal (110) is configured to invoke a synchronization event, provide a value of the terminal clock (111) associated with the synchronization event for notification to the server (120) and to receive the time difference provided by the server (120).

13. The user terminal according to any of claims 10-12, further comprising a password generator (140) for generating a time-synchronized one-time password for authenticating the user with a server (120), wherein the password generator (140) is configured to generate the time-synchronized one-time password as a function of the synchronized terminal time read from the synchronized timer (112).

14. A computer system comprising a terminal and a server and requiring time synchronization between the terminal and the server, wherein the terminal (110) is a user terminal according to claim 13 and the server (120) comprises a synchronization module (123) configured to receive a synchronization event notification and to provide the value of the server clock (121) associated with the moment of occurrence of the synchronization event.

15. The system according to claim 14, wherein the synchronization module (123) of the server (120) is further configured to provide a synchronization information by displaying a time-synchronized one-time password (421) generated as a function of a current state of the server clock (121) and displaying a time-variable object (422) indicating the time elapsed since the time of generation of the time-synchronized one-time password (421).
